# EUROPÄISCHE PATENTSCHRIFT

(11) **EP 2 986 846 B1**
(45) Veröffentlichungstag und Bekanntmachung des Hinweises auf die Patenterteilung: **26.06.2019**
(21) Anmeldenummer: 14705693.1
(22) Anmeldetag: 09.01.2014
(51) Int. Cl.: F03D 9/00, F03D 13/00

(54) **ANTRIEB UND VERFAHREN ZUM BETREIBEN EINES SOLCHEN ANTRIEBS**
DRIVE AND METHOD FOR OPERATING SUCH A DRIVE
MÉCANISME D'ENTRAÎNEMENT ET PROCÉDÉ SERVANT À FAIRE FONCTIONNER UN MÉCANISME D'ENTRAÎNEMENT DE CE TYPE

(30) Priorität: 18.04.2013 AT 3262013
(43) Veröffentlichungstag der Anmeldung: 24.02.2016
(73) Patentinhaber: SET Sustainable Energy Technologies GmbH, 9020 Klagenfurt am Wörthersee (AT)
(72) Erfinder: WALDNER, Markus, 9020 Klagenfurt (AT); HEHENBERGER, Gerald, 9020 Klagenfurt (AT)
(74) Vertreter: Beer & Partner Patentanwälte KG
(86) Internationale Anmeldenummer: PCT/AT2014/000003
(87) Internationale Veröffentlichungsnummer: WO 2014/169302

(56) Entgegenhaltungen:
- EP-A2- 1 895 157
- WO-A1-2006/010190
- WO-A1-2011/000008
- WO-A2-2010/063052
- GB-A- 2 429 342

## Beschreibung

Die Erfindung betrifft einen Antrieb gemäß Oberbegriff des Anspruchs 1 und ein Verfahren zum Betreiben eines solchen Antriebs.

Die WO 2011/000008 A offenbart einen Antrieb und ein Verfahren zum Betreiben eines Differenzialgetriebes für eine Energiegewinnungsanlage mit einer Antriebswelle, einer mit einem Stromnetz verbundenen elektrischen Maschine und mit einem Differenzialgetriebe mit drei An- bzw. Abtrieben, wobei ein Antrieb/Abtrieb mit der Antriebswelle, ein Abtrieb/Antrieb mit der elektrischen Maschine und ein Antrieb mit einem Differenzial-Antrieb verbunden ist, der über einen Frequenzumrichter und gegebenenfalls einen Transformator an das Stromnetz angeschlossen ist. In der WO 2011/000008 A ist nicht offenbart, dass die elektrische Maschine mit dem Frequenzumrichter verbunden werden kann.

Z.B. bei großen Windkraftanlagen, die meist drehzahlvariabel betrieben werden, können Drehzahlschwankungen mit einem elektromechanischen Differenzialsystem so ausgeglichen werden, dass man einen elektrisch erregten Synchrongenerator direkt ans Versorgungsnetz anschließen kann. Dabei umgeht man das Problem der großen Verluste, welches bei einer herkömmlichen Niederspannungs-Vollumrichterlösung durch die doppelte Umwandlung der Generatorleistung in Gleichstrom und wieder zurück in Wechselstrom entsteht.

Die verfügbare Drehzahlvariabilität ist jedoch eingeschränkt. Das bedeutet, dass vor allem der niedere Drehzahlbereich (bei Schwachwind) durch dieses Prinzip nicht erfasst werden kann. Stand der Technik ist es gemäß WO 2011/000008 A, eine Drehzahlerweiterung dadurch zu erreichen, dass man das Übersetzungsverhältnis des Differenzialgetriebes auf 1 festlegt. Der Synchrongenerator wird dabei vom Netz genommen, da nun keine Drehzahlanpassung an die Netzfrequenz mehr möglich ist. Jedoch kann nun der bei einem elektromechanischen Differenzialsystem zur Verfügung stehende Differenzial-Antrieb im Vollumrichterbetrieb als Generator verwendet werden. Das für die optimale Dimensionierung des Differenzialsystems gewählte Übersetzungsverhältnis des Differenzialgetriebes ist jedoch in diesem Betriebsmodus nicht mehr wirksam, wodurch das für die Dimensionierung des Differenzialantriebes bestimmende Drehmoment schon bei relativ niedrigen Drehzahlen erreicht wird und dadurch das tatsächlich durch den Wind vorhandene Leistungsangebot nur teilweise genutzt werden kann.

Darüber hinaus erfordert die Ausstattung des elektromechanischen Differenzialsystems gemäß WO 2011/000008 A mit einer Kupplung, mit der das Übersetzungsverhältnis des Differenzialgetriebes auf 1 festlegt werden kann, einen zusätzlichen Aufwand in konstruktiver Hinsicht. Zusätzlich muss man beim Kuppeln darauf achten, dass eine Synchronisation stattfindet, was einen gewissen regelungstechnischen Aufwand bedeutet, da eine zu hohe Differenzdrehzahl zur Schädigung der Kupplung führen kann.

Der Erfindung liegt daher die Aufgabe zu Grunde, eine alternative Lösung zu finden, mit welcher der Differenzial-Antrieb als alleiniger Generator betrieben werden kann.

Gelöst wird diese Aufgabe mit einer Energiegewinnungsanlage mit den Merkmalen des Anspruchs 1.

Gelöst wird diese Aufgabe des Weiteren mit Verfahren mit den Merkmalen der Ansprüche 11 bzw. 14.

Bevorzugt wird bei einer Energiegewinnungsanlage bei niedrigen Antriebswellendrehzahlen die Drehzahl des Differenzial-Antriebs auf 0 festgesetzt. Die Drehzahl 0 wird vorzugsweise aktiv durch den Differenzial-Antrieb selbst angefahren. Sobald er diese erreicht hat, wird der Differenzial-Antrieb durch eine Bremse festgehalten. Danach kann man den Differenzial-Antrieb von der elektrischen Versorgung bzw. dem Stromnetz trennen. Die elektrische Maschine, z. B. ein Synchrongenerator, wird ebenfalls vom Stromnetz getrennt und auf die elektrische Versorgung des Differenzial-Antriebs umgeschaltet. Da der Differenzial-Antrieb eine Drehstrommaschine ist, welche über einen Frequenzumrichter und ggf. einen Transformator ans Netz angeschlossen ist, kann nun der Synchrongenerator über den Frequenzumrichter und den Transformator der Drehstrommaschine weiter betrieben werden.

Entsprechend der aktuellen Drehzahl und der Erregung wird vom Synchrongenerator elektrische Leistung erzeugt, die nun aber über den Frequenzumrichter und den Transformator im Vollumrichtermodus an das Netz geliefert wird. Der Vorteil dieses Konzepts ist, dass keine Synchronisation beim Umschalten des Synchrongenerators in den Vollumrichtermodus benötigt wird und auch keine aufwändige Kupplung in das Differenzialgetriebe eingebaut werden muss. Da der Differenzial-Antrieb die Drehzahl 0 hat, hängt die variable Generatordrehzahl nun vom konstanten Übersetzungsverhältnis des Differenzialgetriebes ab.

Der erfindungsgemäße Antrieb und das erfindungsgemäße Verfahren können auch bei Industrie-Antriebslösungen in den Bereichen Pumpen, Pump-Turbinen, Kompressorantrieben und dergleichen verwendet werden.

Bevorzugte Ausführungsformen der Erfindung sind Gegenstand der Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen.

Es zeigt:
- Fig. 1: das Prinzip eines Differenzialgetriebes mit einem elektrischen Differenzial-Antrieb gemäß Stand der Technik,
- Fig. 2: eine erste Ausführungsform, wie eine elektrische Maschine an den Umrichter des Differenzialsystems angeschlossen werden kann,
- Fig. 3: eine zweite Ausführungsform, wie eine elektrische Maschine an den Umrichter des Differenzialsystems angeschlossen werden kann und

- Fig. 4: ein Prinzip, wie eine elektrische Maschine zum Synchronisieren mit dem Netz hochgefahren werden kann.

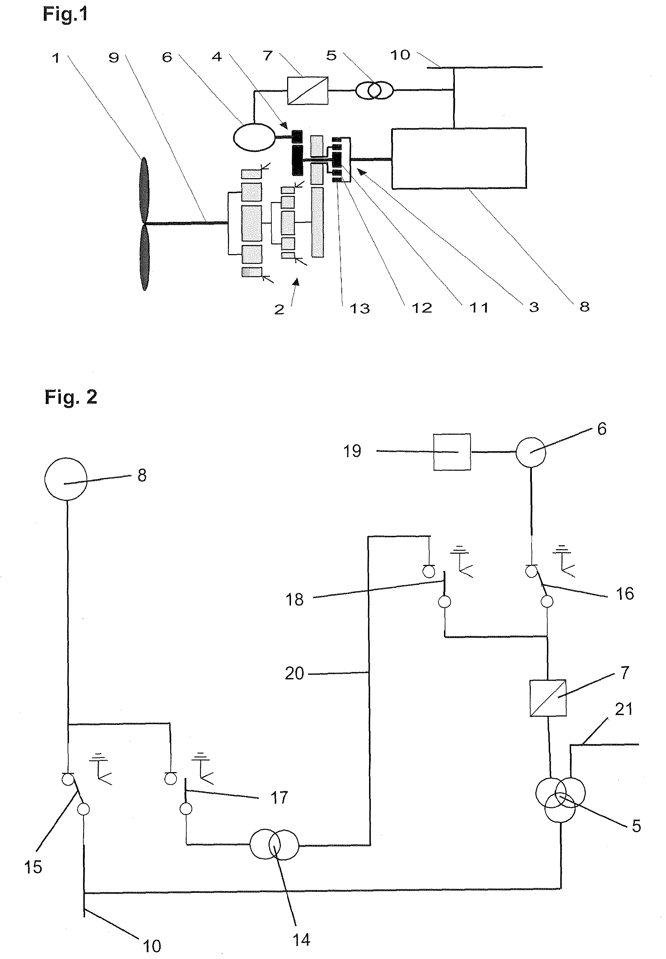

Fig. 1 zeigt ein System einer Windkraftanlage gemäß Stand der Technik. Ein Rotor 1 der Windkraftanlage, der auf einer Antriebswelle 9 für ein Hauptgetriebe 2 sitzt, treibt das Hauptgetriebe 2 an. Das Hauptgetriebe 2 ist ein 3-stufiges Getriebe mit zwei Planetenstufen und einer Stirnradstufe. Zwischen dem Hauptgetriebe 2 und einer elektrischen Maschine 8, vorzugsweise ein fremderregter Synchrongenerator, befindet sich ein Differenzialgetriebe 3 mit einem Sonnenrad bzw. Ritzel 11, einem Planetenträger 12 und einem Hohlrad 13. Das Differenzialgetriebe 3 wird vom Hauptgetriebe 2 über den Planetenträger 12 angetrieben. Das Sonnenrad 11 wird über eine Anpassungs-Getriebestufe 4 von einem Differenzial-Antrieb 6 angetrieben. Um die Eingangsdrehzahl für den Differenzial-Antrieb 6 zu erhöhen, wird im gezeigten Fall ein 2-stufiges Differenzialgetriebe gewählt, welches die Anpassungs-Getriebestufe 4 in Form einer Stirnradstufe zwischen dem Differenzialgetriebe 3 und dem Differenzial-Antrieb 6 aufweist. Der Differenzial-Antrieb 6 ist eine Drehstrommaschine, welche über einen Frequenzumrichter 7 und einen Transformator 5 an ein Netz 10 angeschlossen ist.

Die elektrische Maschine 8 ist mit dem Hohlrad 13 des Differenzialgetriebes 3 verbunden und wird von diesem angetrieben. Die Drehzahl des Differenzial-Antriebes 6 wird geregelt, um einerseits bei variabler Drehzahl des Rotors 1 eine konstante Drehzahl der elektrischen Maschine 8 zu gewährleisten und andererseits das Drehmoment im kompletten Triebstrang der Windkraftanlage zu regeln.

Dieses Konzept ist für ausreichend starken Wind gut geeignet, unterliegt aber aufgrund einer beschränkten Drehzahlvariabilität vor allem für niedere Drehzahlbereiche bei schwachem Wind gewissen Einschränkungen.

Eine erfindungsgemäße Windkraftanlage kann, abgesehen von den erfindungsgemäßen Änderungen, so wie in Verbindung mit Fig. 1 beschrieben aufgebaut sein. Ein anderer Aufbau des Triebstranges ist aber ebenso möglich, solange er die erfindungsgemäßen Merkmale der Patentansprüche aufweist.

Die erfindungsgemäße Änderung besteht darin, dass man den Differenzial-Antrieb 6 von seiner elektrischen Versorgung, im vorliegenden Fall also vom Frequenzumrichter 7 und vom Transformator 5, trennen und statt dessen den Synchrongenerator 8 über den Frequenzumrichter 7 und den Transformator 5 an das Netz 10 anschließen kann, während der Differenzialantrieb 6 die Drehzahl 0 hat. Nun kann der Synchrongenerator 8 über den Frequenzumrichter 7 und den Transformator 5 mit variabler Drehzahl weiter betrieben werden.

In Fig. 2 ist eine erste Ausführungsform einer Schaltung dargestellt, mit der dies durchgeführt werden kann. Die Fig. 2 zeigt ein Konzept, bei dem die elektrische Maschine 8, z.B. ein 6,3 kV Mittelspannungs-Synchrongenerator, über eine Verbindungsleitung 20 mit einem Transformator 14 mit dem Frequenzumrichter 7 und dem Transformator 5 verbunden werden kann. Der Transformator 14 ist erforderlich, wenn der Synchrongenerator 8 eine andere Nennspannung als der Differenzial-Antrieb 6 aufweist, z.B. der Synchrongenerator 8 eine Nennspannung von 6,3 kV liefert, die Stromversorgung 5, 7 des Differenzial-Antriebs 6 aber auf eine Nennspannung von z.B. 690 V ausgelegt ist. An den Transformator 5 können auch andere Verbraucher bzw. Hilfsantriebe oder auch Stromquellen angeschlossen werden, wie durch die Leitung 21 symbolisch dargestellt ist.

In einer Windkraftanlage wird vorzugsweise ein fremderregter Mittelspannungs-Synchrongenerator eingesetzt. Der dargestellte Schalter 17 ist dann sinnvoll, wenn bei mit dem Netz verbundenem Synchrongenerator 8 die Leerlaufverluste des Trafos vermieden werden sollen. In jedem Fall ist in diesem Betriebszustand einer der beiden Schalter 17 oder 18 erforderlich um den Synchrongenerator 8 vom motorseitige Teil des Frequenzumrichters 7 zu trennen, sobald dieser beginnt den Differenzialantrieb 6 anzusteuern. Ein wesentlicher Nachteil des Mittelspannungs-Schalters 17 ist, dass dieser wesentlich teurer als ein Niederspannungs-Schalter 18 ist. Es kann alternativ auch ein Niederspannungs-Synchrongenerator mit einer Nennspannung gleich der des motorseitige Teils des Frequenzumrichters 7 eingesetzt werden, wodurch der Trafo 14 und großteils auch der Trafo 5 entfallen kann.

Der Umschaltvorgang kann so erfolgen, dass zunächst der Synchrongenerator 8 mit einem Schalter 15 vom Netz 10 getrennt und die Drehzahl des Differenzial-Antriebs 6 auf Null gefahren wird, worauf der Differenzial-Antrieb 6 mit einer Bremse 19 festgehalten wird. Damit erhält das Differenzialgetriebe 3 eine konstante Übersetzung. Dann wird der Differenzial-Antrieb 6 mit einem Schalter 16 von seiner Stromversorgung 5, 7 getrennt. Anschließend werden zwei Schalter 17, 18, soweit vorhanden, geschlossen, mit denen der Synchrongenerator 8 über den Transformator 14 an die frühere Stromversorgung des Differenzial-Antriebs 6, also den motorseitigen Teil des Frequenzumrichters 7 und den Transformator 5, angeschlossen wird.

Der Synchrongenerator 8 kann nun mit variabler Drehzahl Strom in das Netz 10 einspeisen.

Wenn der Wind wieder eine Stärke erreicht, welche über der Belastungsgrenze des Frequenzumrichters 7 bzw. des Transformators 5 liegt, werden die Schalter 17, 18, soweit vorhanden, wieder geöffnet und der Differenzial-Antrieb 6 wieder mit dem Schalter 16 zugeschaltet und die Bremse 19 gelöst. Anschließend wird der Generator 8 mittels Drehzahlregelung durch den Differenzialantrieb 6 mit dem Netz 10 synchronisiert und dann der Schalter 15 geschlossen.

Eine alternative Methode wäre, die Schalter 17 und 18, soweit vorhanden, vorerst nicht zu öffnen und den Generator 8 mittels des Frequenzumrichters 7 mit dem Netz 10 zu synchronisieren und dann den Schalter 15 zu schließen, anschließend oder zeitgleich die Schalter 17, 18 zu öffnen und abschließend den Schalter 16 zu schließen und die Bremse 19 zu lösen.

Der Synchrongenerator 8 und der Rotor 1 müssen weder beim Umschalten in den Umrichter-Modus, in dem der Synchrongenerator 8 über den Frequenzumrichter 7 und den Transformator 5 an das Netz 10 angeschlossen ist, noch beim Umschalten in den Synchron-Modus, in dem der Generator 8 direkt an das Netz 10 angeschlossen ist, angehalten werden.

Ein weiterer vorteilhafter Anwendungsfall dieser Schaltung ist, dass der Synchrongenerator 8 nun auch mittels des Frequenzumrichters 7 und des bei Spannungsdifferenz vorhandenen Transformators 5 für z.B. Wartungsaufgaben hochgefahren bzw. bei einem Systemstart im Differenzialmodus mit dem Netz 10 synchronisiert werden kann. Der Synchrongenerator 8 ist wie oben beschrieben mittels des Frequenzumrichters 7 und des Transformators 5 mit dem Netz 10 verbunden und arbeitet in diesem Fall als Motor. Sobald der Synchrongenerator 8 netzsynchron läuft, wird der Schalter 15 geschlossen und der Schalter 17 und/oder 18 geöffnet.

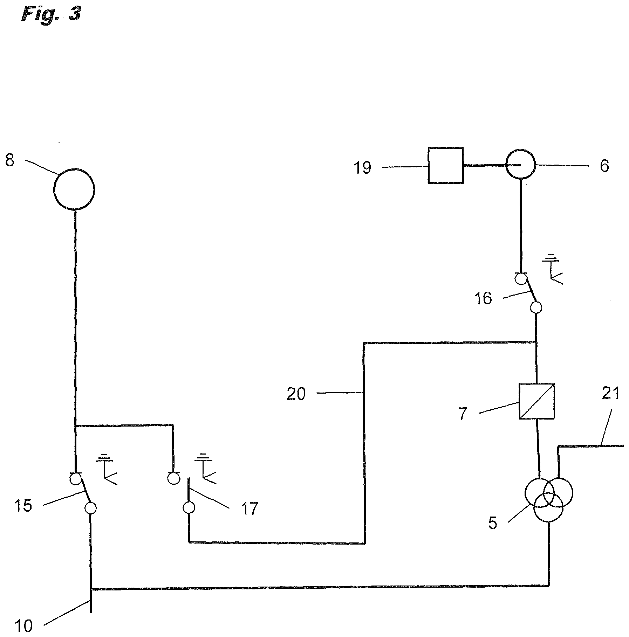

In Fig. 3 ist eine andere Ausführungsform der Erfindung dargestellt, bei welcher der Synchrongenerator 8 entweder eine ähnliche oder die gleiche Nennspannung wie der Frequenzumrichter 7 hat oder z.B. ein 6,3 kV Mittelspannungsgenerator so erregt wird, dass die Generatorausgangsspannung im Arbeitsspannungsbereich des Frequenzumrichters 7 liegt. Dadurch kann der Synchrongenerator 8 direkt ohne Transformator an die frühere Stromversorgung des Differenzial-Antriebs 6, also den Frequenzumrichter 7 und den unter Umständen vorhandenen Transformator 5, angeschlossen werden. Daher kann auch auf den Schalter 18 oder 17 der Ausführungsform von Fig. 2 verzichtet werden.

Der Umschaltvorgang erfolgt im Übrigen analog wie zu Fig. 2 beschrieben.

Anstelle von Synchrongeneratoren können alternativ auch Asynchronmaschinen eingesetzt werden. Der erfindungsgemäße Antrieb und das erfindungsgemäße Verfahren kann auch bei Industrie-Antriebslösungen in den Bereichen Pumpen, Pump-Turbinen, Kompressorantrieben und dergleichen verwendet werden. Grundsätzlich gilt hierfür Gleiches wie zu Fig. 2 und 3 erläutert, wobei die Energie im "Normalbetrieb" in umgekehrter Richtung fließt. Mit Bezug auf Fig. 1 wäre in diesem Fall der erste Antrieb mit der Antriebswelle 9 ein Abtrieb und der mit der elektrischen Maschine 8 verbundene Abtrieb des Differenzialgetriebes 3 der erste Antrieb. Für die Betriebsmodi "Bewegen des Antriebs" für z.B. Wartungsaufgaben bzw. "Hochfahren" der elektrischen Maschine 8 und mit dem Netz 10 synchronisieren gilt Gleiches wie zu Fig. 2 beschrieben. Dabei ist das dafür vorhandene Drehmoment im Wesentlichen auf die Leistung des Frequenzumrichters 7 beschränkt und kann bei direkt an den Antrieb gekoppelten Pumpen bzw. Pump-Turbinen das für das Hochfahren erforderliche Drehmoment begrenzt werden, indem man z.B. in den Pumpenraum Pressluft einbläst oder den Pumpenraum vom Triebwasserkanal abschottet.

Die zu Fig. 2 beschriebene alternative Methode zur Netzsynchronisation bei Verwendung der elektrischen Maschine 8 als Antrieb, insbesondere Industrieantrieb, wäre in diesem Fall, die elektrische Maschine 8 bei geschlossenen Schaltern 17 und 18, soweit vorhanden, mittels des Frequenzumrichters 7 mit dem Netz 10 zu synchronisieren und dann den Schalter 15 zu schließen und abschließend oder zeitgleich die Schalter 17 und/oder 18 zu öffnen. Damit kann jede Art von elektrischer Maschine 8 stoßfrei ans Netz 10 geschaltet werden. Dabei kann, aufgrund der mechanischen Gegebenheiten des Differenzialgetriebes 11 bis 13, die Drehzahl des Differenzialantriebs 6 einen Wert weit über dessen Regeldrehzahlbereich erreichen und die Drehzahl des ersten Antriebs 9 nahe Null sein. In diesem Fall würde der Differenzialantrieb 6 erst dann mit der Regelung des Antriebs beginnen, sobald die mit dem Ritzel 11 verbundene Antriebswelle des Differenzialgetriebes 19 im Regeldrehzahlbereich des Differenzialantriebs 6 liegt. Der Regeldrehzahlbereich ist der Drehzahlbereich, in dem der Differenzialantrieb 6 arbeitet um den Arbeitsdrehzahlbereich der anzutreibenden Arbeitsmaschine realisieren zu können. Der Regeldrehzahlbereich wird dabei v.a. durch die vom Hersteller spezifizierten Spannungs-, Strom- und Drehzahlgrenzen bestimmt. Außerhalb dieser Grenzen kann der Differenzialantrieb 6 nicht mit dem Netz 10 verbunden sein.

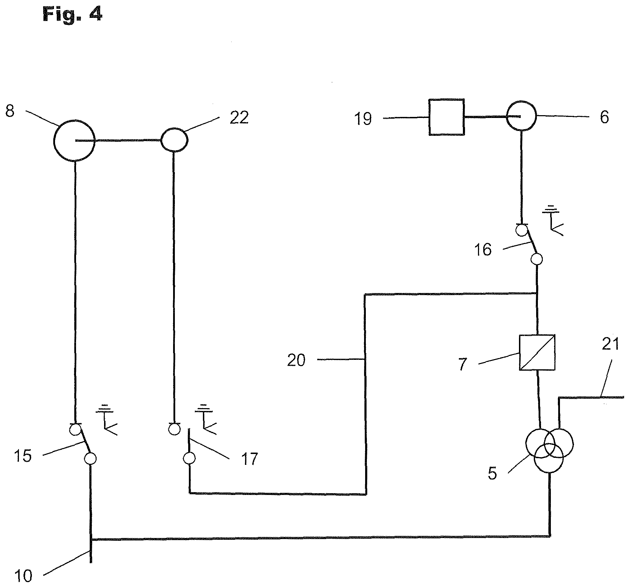

Fig. 4 zeigt eine alternative Ausführungsform. Bei dieser wird der Synchrongenerator 8 mittels eines Hilfsantriebes 22 hochgefahren, welcher vorzugsweise eine Drehstrommaschine ist und vorzugsweise kuppelbar mit dem Synchrongenerator 8 verbunden ist. Der Hilfsantrieb 22 wird vorzugsweise vom Frequenzumrichter 7 oder alternativ von einem separaten Frequenzumrichter angetrieben oder auch direkt (im Bedarfsfall über den Transformator 5) an ein Netz 10 geschaltet. Da eine solche Drehstrommaschine zum Hochfahren des Synchrongenerators 8 verhältnismäßig klein sein kann, ist der resultierende Strombezug im Falle einer direkten Netzkopplung ebenfalls entsprechend klein.

Schließlich ist auch denkbar, dass anstelle des erwähnten Hilfsantriebs 22 eine Hilfswicklung in den Synchrongenerator 8 integriert wird.

In den Beschreibungen zu Fig. 1 bis 4 wurden großteils Mittelspannungs-Synchrongeneratoren genannt, welche auch motorisch betrieben werden können. Die Begründung dafür liegt im hohen Wirkungsgrad und der exzellenten Stromqualität solcher elektrischer Maschinen, was bei Wind- und Wasserkraftanwendungen von besonderer Bedeutung ist. Im industriellen Bereich (z.B. Pumpen, Kompressoren, Industrieantriebe, etc.) werden jedoch meist Niederspannungs- bzw. Mittelspannungs-Asynchronmaschinen eingesetzt. Der Grund dafür liegt darin, dass solche Maschinen kostengünstig und sehr robust sind. Es kann aber prinzipiell auch jede andere Art von elektrischer Maschine eingesetzt werden.

Grundsätzlich ist die vorliegende Erfindung für jeden Antrieb anwendbar, bei dem ein kleiner Betriebs-Drehzahlbereich zu vergrößern ist und/oder eine elektrische Maschine in deren Betriebs-Drehzahlbereich hochgefahren bzw. mit einem Netz synchronisiert werden muss. Dies gilt v.a. für eine große Zahl von industriellen Anwendungen wie z.B. Pumpen, Kompressoren, Antriebe von Mühlen und Brechern und dergleichen.

## Patentansprüche

1. Antrieb mit einer Antriebswelle (9), einer mit einem Stromnetz (10) verbundenen elektrischen Maschine (8) und mit einem Differenzialgetriebe (3) mit drei An- bzw. Abtrieben, wobei ein Antrieb/Abtrieb mit der Antriebswelle (9), ein Abtrieb/Antrieb mit der elektrischen Maschine (8) und ein Antrieb mit einem Differenzial-Antrieb (6) verbunden ist, der über einen Frequenzumrichter (7) und gegebenenfalls einen Transformator (5) an das Stromnetz (10) angeschlossen ist, und die elektrische Maschine (8) mit dem Frequenzumrichter (7) verbindbar ist, und **dadurch gekennzeichnet, dass** der Differenzial-Antrieb (6) über einen Schalter (16) trennbar mit dem Frequenzumrichter (7) verbunden ist.

2. Antrieb nach Anspruch 1, **dadurch gekennzeichnet, dass** der Differenzial-Antrieb (6) mit einer Bremse (19) verbunden ist.

3. Antrieb nach Anspruch 1 oder 2, **dadurch gekennzeichnet, dass** die elektrische Maschine (8) über einen weiteren Transformator (14) mit dem Frequenzumrichter (7) verbindbar ist.

4. Antrieb nach einem der Ansprüche 1 bis 3, **dadurch gekennzeichnet, dass** die elektrische Maschine (8) über einen Schalter (15) mit dem Netz (10) verbunden ist.

5. Antrieb nach den Ansprüchen 1, 3 und 4, **dadurch gekennzeichnet, dass** der weitere Transformator (14) über jeweils einen Schalter (17, 18) mit der elektrischen Maschine (8) und dem Frequenzumrichter (7) verbindbar ist und diese Schalter (17, 18) nur geschlossen werden können, wenn Schalter (16), welcher den Differenzial-Antrieb (6) mit dem Frequenzumrichter (7) verbinden, geöffnet ist.

6. Antrieb nach den Ansprüchen 1 und 4, **dadurch gekennzeichnet, dass** die elektrische Maschine (8) über einen Schalter (17, 18) direkt mit dem Frequenzumrichter (7) verbindbar ist.

7. Antrieb nach einem der Ansprüche 1 bis 6, **dadurch gekennzeichnet, dass** die elektrische Maschine (8) ein Generator einer Energiegewinnungsanlage, insbesondere einer Windkraftanlage oder einer Wasserkraftanlage ist.

8. Antrieb nach einem der Ansprüche 1 bis 6, **dadurch gekennzeichnet, dass** die elektrische Maschine (8) ein Motor einer Pumpe, eines Kompressors, eines Industrieantriebes oder dergleichen ist.

9. Antrieb nach einem der Ansprüche 1 bis 8, **dadurch gekennzeichnet, dass** die elektrische Maschine (8) ein Synchrongenerator, vorzugsweise ein Mittelspannungs-Synchrongenerator ist und nur so stark erregt wird, dass dessen Spannung der Spannung des Frequenzumrichters (7) im Wesentlichen entspricht.

10. Antrieb nach einem der Ansprüche 1 bis 9, **dadurch gekennzeichnet, dass** die elektrische Maschine eine Hilfswicklung aufweist, die an den Frequenzumrichter (7) anschließbar ist.

11. Verfahren zum Betreiben eines Antriebs mit einer Antriebswelle (9), einer mit einem Stromnetz (10) verbundenen elektrischen Maschine (8) und mit einem Differenzialgetriebe (3) mit drei An- bzw. Abtrieben, wobei ein Antrieb/Abtrieb mit der Antriebswelle, ein Abtrieb/Antrieb mit der elektrischen Maschine (8) und ein Antrieb mit einem Differenzial-Antrieb (6) verbunden ist, der über einen Frequenzumrichter (7) und gegebenenfalls einen Transformator (5) an das Stromnetz (10) angeschlossen ist, **dadurch gekennzeichnet, dass** von einer Betriebsart, bei der sowohl die elektrische Maschine (8) als auch der Differenzial-Antrieb (6) mit dem Netz (10) verbunden sind, in eine andere Betriebsart, bei welcher nur die elektrische Maschine (8) mit dem Stromnetz (10) verbunden ist, umgeschaltet wird, indem die elektrische Maschine (8) vom Netz getrennt, der Differenzial-Antrieb (6) vom Frequenzumrichter (7) getrennt und die elektrische Maschine (8) mit dem Frequenzumrichter (7) verbunden wird.

12. Verfahren nach Anspruch 11, **dadurch gekennzeichnet, dass** die elektrische Maschine (8) vom Netz getrennt und die Drehzahl des Differenzial-Antriebs (6) auf Null geregelt wird und anschließend der Differenzial-Antrieb (6) vom Frequenzumrichter (7) getrennt wird.

13. Verfahren nach Anspruch 11 oder 12, **dadurch gekennzeichnet, dass** die elektrische Maschine (8) mit dem Frequenzumrichter (7) verbunden wird, während die Drehzahl des Differenzial-Antriebs Null bleibt.

14. Verfahren zum Betreiben eines Antriebs mit einer Antriebswelle (9), einer mit einem Stromnetz (10) verbundenen elektrischen Maschine (8) und mit einem Differenzialgetriebe (3) mit drei An- bzw. Abtrieben, wobei ein Antrieb/Abtrieb mit der Antriebswelle, ein Abtrieb/Antrieb mit einer elektrischen Maschine (8) und ein Antrieb mit einem Differenzial-Antrieb (6) verbunden ist, der über einen Frequenzumrichter (7) und gegebenenfalls einen Transformator (5) mit dem Stromnetz (10) verbindbar ist, **dadurch gekennzeichnet, dass** die elektrische Maschine (8) in Betrieb genommen wird, während der Differenzial-Antrieb (6) vom Netz getrennt und die elektrische Maschine (8) über den Frequenzumrichter (7) und gegebenenfalls den Transformator (5) an das Stromnetz (10) angeschlossen sind.

15. Verfahren nach Anspruch 14, **dadurch gekennzeichnet, dass** die elektrische Maschine (8) in Betrieb genommen wird, während die Drehzahl des Differenzial-Antriebs (6) Null ist.

16. Verfahren nach Anspruch 14 oder 15, **dadurch gekennzeichnet, dass** die elektrische Maschine (8) zu Wartungszwecken kurzfristig in Betrieb genommen wird.

17. Verfahren nach Anspruch 14, **dadurch gekennzeichnet, dass** anschließend die elektrische Maschine mit dem Stromnetz (10) verbunden wird und die elektrische Maschine (8) vom Frequenzumrichter (7) und gegebenenfalls Transformator (5) getrennt und der Differenzial-Antrieb (6) mit dem Frequenzumrichter (7) und gegebenenfalls dem Transformator (5) an das Stromnetz (10) angeschlossen wird.

18. Verfahren nach Anspruch 17, **dadurch gekennzeichnet, dass** die elektrische Maschine (8) mit dem Stromnetz (10) synchronisiert wird, bevor die elektrische Maschine (8) vom Frequenzumrichter (7) und gegebenenfalls Transformator (5) getrennt wird.

19. Verfahren nach Anspruch 17, **dadurch gekennzeichnet, dass** die elektrische Maschine (8) mit dem Stromnetz (10) synchronisiert wird, nachdem sie vom Frequenzumrichter (7) und gegebenenfalls Transformator (5) getrennt wurde und bevor sie mit dem Stromnetz (10) verbunden wird.

## Claims

1. Drive with a drive shaft (9), an electrical machine (8) connected to a power grid (10), and with a differential gear (3) with three drives and three power take-offs, respectively, whereby one drive/power take-off is connected to the drive shaft (9), one drive/power take-off is connected to the electrical machine (8), and one drive is connected to a differential drive (6), which is connected via a frequency converter (7) and optionally a transformer (5) to the power grid (10), and the electrical machine (8) can be connected to the frequency converter (7), **characterized in that** the differential drive (6) is connected in a separable manner via a switch (16) to the frequency converter (7).

2. Drive according to Claim 1, **characterized in that** the differential drive (6) is connected to a brake (19).

3. Drive according to Claim 1 or 2, **characterized in that** the electrical machine (8) can be connected via another transformer (14) to the frequency converter (7) .

4. Device according to one of Claims 1 to 3, **characterized in that** the electrical machine (8) is connected via a switch (15) to the grid (10).

5. Drive according to Claims 1, 3 and 4, **characterized in that** the additional transformer (14) can in each case be connected via a switch (17, 18) to the electrical machine (8) and the frequency converter (7), and these switches (17, 18) can only be closed if switch (16), which is connects the differential drive (6) to the frequency converter (7), is opened.

6. Drive according to Claims 1 and 4, **characterized in that** the electrical machine (8) can be connected via a switch (17, 18) directly to the frequency converter (7) .

7. Drive according to one of Claims 1 to 6, **characterized in that** the electrical machine (8) is a generator of an energy-generating unit, in particular a wind power plant or a hydro-electric power plant.

8. Drive according to one of Claims 1 to 6, **characterized in that** the electrical machine (8) is a motor of a pump, a compressor, an industry drive, or the like.

9. Drive according to one of Claims 1 to 8, **characterized in that** the electrical machine (8) is a synchronous generator, preferably a middle-voltage synchronous generator, and is activated only enough that its voltage essentially corresponds to the voltage of the frequency converter (7).

10. Drive according to one of Claims 1 to 9, **characterized in that** the electrical machine has an auxiliary winding, which can be connected to the frequency converter (7).

11. Method for operating a drive with a drive shaft (9), an electrical machine (8) that is connected to a power grid (10), and with a differential gear (3) with three drives and three power take-offs, respectively, whereby one drive/power take-off is connected to the drive shaft, one drive/power take-off is connected to the electrical machine (8), and one drive is connected to a differential drive (6), which is connected via a frequency converter (7) and optionally a transformer (5) to the power grid (10), **characterized in that** it is switched from one type of operation, in which both the electrical machine (8) and the differential drive (6) are connected to the grid (10), into another type of operation, in which only the electrical machine (8) is connected to the power grid (10), by the electrical machine (8) being separated from the grid, the differential drive (6) being separated from the frequency converter (7), and the electrical machine (8) being connected to the frequency converter (7).

12. Method according to Claim 11, **characterized in that** the electrical machine (8) is separated from the grid, and the speed of the differential drive (6) is regulated to zero, and then the differential drive (6) is separated from the frequency converter (7).

13. Method according to Claim 11 or 12, **characterized in that** the electrical machine (8) is connected to the frequency converter (7), while the speed of the differential drive remains zero.

14. Method for operating a drive with a drive shaft (9), an electrical machine (8) that is connected to a power grid (10), and with a differential gear (3) with three drives and three power take-offs, respectively, whereby one drive/power take-off is connected to the drive shaft, one drive/power take-off is connected to an electrical machine (8), and one drive is connected to a differential drive (6), which can be connected via a frequency converter (7) and optionally a transformer (5) to the power grid (10), **characterized in that** the electrical machine (8) is put into operation while the differential drive (6) is separated from the grid, and the electrical machine (8) is connected via the frequency converter (7) and optionally the transformer (5) to the power grid (10).

15. Method according to Claim 14, **characterized in that** the electrical machine (8) is put into operation while the speed of the differential drive (6) is zero.

16. Method according to Claim 14 or 15, **characterized in that** the electrical machine (8) is put briefly into operation for maintenance purposes.

17. Method according to Claim 14, **characterized in that** then the electrical machine is connected to the power grid (10) and the electrical machine (8) is separated from the frequency converter (7) and optionally transformer (5), and the differential drive (6) is connected with the frequency converter (7) and optionally the transformer (5) to the power grid (10).

18. Method according to Claim 17, **characterized in that** the electrical machine (8) is synchronized with the power grid (10) before the electrical machine (8) is separated from the frequency converter (7) and optionally transformer (5).

19. Method according to Claim 17, **characterized in that** the electrical machine (8) is synchronized with the power grid (10) after it was separated from the frequency converter (7) and optionally transformer (5) and before it is connected to the power grid (10).

## Revendications

1. Entraînement avec un arbre d'entraînement (9), avec une machine électrique (8) reliée à un réseau électrique (10) et avec une transmission différentielle (3) avec trois entraînements ou sorties, dans lequel un entraînement/sortie est relié à l'arbre d'entraînement (9), une sortie/entraînement à la machine électrique (8) et un entraînement à un entraînement différentiel (6) qui est relié au réseau électrique (10) par l'intermédiaire d'un convertisseur de fréquences (7) et, le cas échéant, d'un transformateur (5), et la machine électrique (8) peut être reliée au convertisseur de fréquences (7), **caractérisé en ce que** l'entraînement différentiel (6) est relié au convertisseur de fréquences (7) avec possibilité de coupure par l'intermédiaire d'un interrupteur (16).

2. Entraînement selon la revendication 1, **caractérisé en ce que** l'entraînement différentiel (6) est relié à un frein (19).

3. Entraînement selon la revendication 1 ou 2, **caractérisé en ce que** la machine électrique (8) peut être reliée au convertisseur de fréquences (7) par l'intermédiaire d'un autre transformateur (14).

4. Entraînement selon l'une des revendications 1 à 3, **caractérisé en ce que** la machine électrique (8) est reliée au réseau (10) par l'intermédiaire d'un interrupteur (15).

5. Entraînement selon les revendications 1, 3 et 4, **caractérisé en ce que** l'autre transformateur (14) est relié respectivement par l'intermédiaire d'un interrupteur (17, 18) à la machine électrique (8) et au convertisseur de fréquences (7) et ces interrupteurs (17, 18) ne peuvent être que fermés quand l'interrupteur (16) par l'intermédiaire duquel l'entraînement différentiel (6) est relié au convertisseur de fréquences (7) est ouvert.

6. Entraînement selon les revendications 1 et 4, **caractérisé en ce que** la machine électrique (8) peut être directement reliée au convertisseur de fréquences (7) par l'intermédiaire d'un interrupteur (17, 18).

7. Entraînement selon l'une des revendications 1 à 6, **caractérisé en ce que** la machine électrique (8) est un générateur d'une installation d'extraction d'énergie, en particulier d'une installation génératrice éolienne ou d'une installation génératrice hydraulique.

8. Entraînement selon l'une des revendications 1 à 6, **caractérisé en ce que** la machine électrique (8) est un moteur d'une pompe, d'un compresseur, d'un entraînement industriel ou similaire.

9. Entraînement selon l'une des revendications 1 à 8, **caractérisé en ce que** la machine électrique (8) est un générateur synchrone, de préférence un générateur synchrone à moyenne tension, et n'est excitée que suffisamment pour que sa tension corresponde sensiblement à la tension du convertisseur de fréquences (7).

10. Entraînement selon l'une des revendications 1 à 9, **caractérisé en ce que** la machine électrique présente un enroulement auxiliaire qui peut être relié au convertisseur de fréquences (7).

11. Procédé pour faire fonctionner un entraînement avec un arbre d'entraînement (9), avec une machine électrique (8) reliée à un réseau électrique (10) et avec une transmission différentielle (3) avec trois entraînements ou sorties, dans lequel un entraînement/sortie est relié à l'arbre d'entraînement, une sortie/entraînement à la machine électrique (8) et un entraînement à un entraînement différentiel (6) qui est relié au réseau électrique (10) par l'intermédiaire d'un convertisseur de fréquences (7) et, le cas échéant, d'un transformateur (5), **caractérisé en ce que** le fonctionnement est changé d'un mode de fonctionnement dans lequel la machine électrique (8) ainsi que l'entraînement différentiel (6) sont reliés au réseau (10) à un autre mode de fonctionnement dans lequel seule le machine électrique (8) est reliée au réseau électrique (10) par le fait que la machine électrique (8) est coupée du réseau, l'entraînement différentiel (6) est coupé du convertisseur de fréquences (7) et la machine électrique (8) est reliée au convertisseur de fréquences (7).

12. Procédé selon la revendication 11, **caractérisé en ce que** la machine électrique (8) est coupée du réseau et la vitesse de rotation de l'entraînement différentiel (6) est réglée à zéro, après quoi l'entraînement différentiel (6) est coupé du convertisseur de fréquences (7).

13. Procédé selon la revendication 11 ou 12, **caractérisé en ce que** la machine électrique (8) est reliée au convertisseur de fréquences (7) pendant que la vitesse de rotation de l'entraînement différentiel reste à zéro.

14. Procédé pour faire fonctionner un entraînement avec un arbre d'entraînement (9), avec une machine électrique (8) reliée à un réseau électrique (10) et avec une transmission différentielle (3) avec trois entraînements ou sorties, dans lequel un entraînement/sortie est relié à l'arbre d'entraînement, une sortie/entraînement à la machine électrique (8) et un entraînement à un entraînement différentiel (6) qui est relié au réseau électrique (10) par l'intermédiaire d'un convertisseur de fréquences (7) et, le cas échéant, d'un transformateur (5), caractérisé en ce la machine électrique (8) est mise en service pendant que l'entraînement différentiel (6) est coupé du réseau et la machine électrique (8) est reliée au réseau électrique (10) par l'intermédiaire du convertisseur de fréquences (7) et, le cas échéant, du transformateur (5).

15. Procédé selon la revendication 14, **caractérisé en ce que** la machine électrique (8) est mise en service pendant que la vitesse de rotation de l'entraînement différentiel (6) est nulle.

16. Procédé selon la revendication 14 ou 15, **caractérisé en ce que** la machine électrique (8) est mise en service pendant une courte durée à des fins de maintenance.

17. Procédé selon la revendication 14, **caractérisé en ce que** la machine électrique est ensuite reliée au réseau électrique (10) et la machine électrique (8) est coupée du convertisseur de fréquences (7) et, le cas échéant, du transformateur (5) et l'entraînement différentiel (6) est relié au réseau électrique (10) par l'intermédiaire du convertisseur de fréquences (7) et, le cas échéant, du transformateur (5).

18. Procédé selon la revendication 17, **caractérisé en ce que** la machine électrique (8) est synchronisée avec le réseau électrique (10) avant que la machine électrique (8) soit coupée du convertisseur de fréquences (7) et, le cas échéant, du transformateur (5).

19. Procédé selon la revendication 17, **caractérisé en ce que** la machine électrique (8) est synchronise avec le réseau électrique (10) après qu'elle a été coupée du convertisseur de fréquences (7) et, le cas échéant, du transformateur (5) et avant d'être reliée au réseau électrique (10).
